# EUROPEAN PATENT APPLICATION

(11) **EP 4 813 556 A1**
(43) Date of publication of application: **30.09.2026**
(21) Application number: 25885387.8
(22) Date of filing: 21.10.2025
(51) Int. Cl.: B23K 11/24, B23K 11/11

(54) **METHOD AND SYSTEM FOR REAL-TIME REGULATION AND CONTROL OF WELDING CURRENT OF INVERTER RESISTANCE WELDER**

(30) Priority: 28.10.2024 CN 202411511883
(71) Applicant: Shanghai Jiao Tong University, Shanghai 200240 (CN)
(72) Inventor: XIA, Yujun, Shanghai 200240 (CN); LI, Yongbing, Shanghai 200240 (CN); WANG, Wenjie, Shanghai 200240 (CN); CHEN, Jiaxuan, Shanghai 200240 (CN); ZHOU, Yunfan, Shanghai 200240 (CN); LOU, Ming, Shanghai 200240 (CN)
(74) Representative: FRKelly
(86) International application number: PCT/CN2025/128992
(87) International publication number: WO 2026/092239

(57) **Abstract**

The present invention provides a real-time welding current regulation method and system for an inverter resistance welding machine. The method comprises: performing welding and acquiring a transformer primary-side current signal; segmenting a current signal of a current cycle; processing and calculating a rapid rising segment; determining a starting point of a ramp segment; deriving a target peak current of the ramp segment; calculating a current statistic for the current cycle; and adjusting a target peak current for a next cycle. According to the present invention, the primary-side current signal of the inverter welding machine is acquired in real time, the current signal is subjected to segment processing and feature extraction, the starting point of the ramp segment is determined, and the target peak current of the ramp segment is derived according to a current target value. When the current in the ramp segment reaches the target peak current, the welding current is turned off. A current statistic within the current cycle is calculated and compared with the current target value, and the target peak current for the next cycle is then adjusted. The above steps are repeated until a welding energization time reaches a preset value, thereby realizing real-time and fine control of the welding current.

## Description

### TECHNICAL FIELD

The present invention relates to the technical field of real-time welding current control in resistance spot welding, and more particularly to a real-time welding current regulation method and system for an inverter resistance welding machine, especially a real-time welding current regulation method for an inverter resistance welding machine based on primary-side current control.

### BACKGROUND ART

During a resistance spot welding process, control of the welding current plays a crucial role in welding quality. Conventional welding current control methods often rely on preset welding parameters and fixed control strategies. However, in practical applications, an actual value of the welding current often deviates from a preset value, resulting in unstable welding quality. In particular, as the temperature of a workpiece increases during welding, the resistance value thereof changes accordingly. When load resistance changes, the welding current control effect is significantly affected. In addition, disturbances such as welding expulsion, transformer magnetization and the like may occur during welding, thereby making it difficult to achieve accurate real-time control of the welding current.

The present invention proposes a new real-time welding current regulation method to improve the above technical problems. The method first acquires a primary-side current signal and segments the primary-side current signal into a rapid rising segment, a ramp segment and a current-off segment, then calculates feature quantities of the current signal to determine a starting point of the ramp segment, and further continuously adjusts a target peak current of the next cycle according to a current target value and a measured statistic until a welding energization time reaches a preset value, thereby realizing fine control of the welding current.

### SUMMARY OF THE INVENTION

In view of the defects in the prior art, an objective of the present invention is to provide a real-time welding current regulation method and system for an inverter resistance welding machine.

According to a real-time welding current regulation method for an inverter resistance welding machine provided by the present invention, the method comprises the following steps:
Step a1: performing resistance spot welding, acquiring a primary-side current signal, and obtaining a curve graph of current varying with time;
Step a2: according to the curve graph of the current varying with time and based on an inverter cycle, dividing the current signal into different cycles, wherein the current signal in each cycle is divided, according to conduction and turn-off of the welding current, into a rapid rising segment *T1*, a ramp segment *T2* and a current-off segment *T3*;
Step a3: for the current signal of a current cycle, processing and calculating the rapid rising segment *T1*, performing mean filtering on primary-side current sampling values, extracting feature quantities from the current signal to obtain a feature-quantity curve graph, and determining the rapid rising segment according to the feature-quantity curve graph;
Step a4: determining a starting point of the ramp segment *T2* according to the feature-quantity curve graph, setting feature-quantity thresholds comprising a high threshold *D_{H}* and a low threshold *D_{L}*, wherein when the feature quantity is higher than the high threshold *D_{H}* for the first time and then is lower than the low threshold *D_{L}*, a time instant at which the feature quantity is lower than the low threshold is determined as the starting point of the ramp segment *T2*, and a current value corresponding to the starting point of the ramp segment *T2* is denoted as *I_{V}*;
Step a5: deriving a target peak current of the ramp segment *T2*, wherein according to a current target value *I_{T}* and the current value *I_{V}* at the starting point of the ramp segment *T2*, a target peak current *I_{P}* of the ramp segment *T2*, namely a current value at a conduction turn-off moment, is derived; when the current in the ramp segment *T2* reaches the target peak current *I_{P}*, the primary-side welding current is switched from a conducting state to an off state, thereby regulating the welding current of the current cycle in real time;
Step a6: calculating a current statistic of the current cycle, wherein point-by-point weighted accumulation is performed on current sampling values within a time range from the starting point of the ramp segment *T2* to a current turn-off moment, so as to obtain a statistic *I_{A}* of the ramp segment *T2*;
Step a7: adjusting a calculation formula of the target peak current *I_{P}* for a next cycle according to *I_{A}* and *I_{T}*;
Step a8: repeating the above steps until the welding energization time reaches a preset value.

Preferably, in step a1, the primary-side current signal of the inverter resistance welding machine is acquired in real time, and the primary-side current signal refers to a rated current of a winding on a high-voltage side of a transformer in the inverter welding machine, namely a power input side.

Preferably, in step a2, the rapid rising segment *T1* refers to a stage in which a current value increases rapidly after the welding current is conducted; the ramp segment *T2* refers to a stage in which the welding current is substantially stable but slowly increases due to a change in workpiece resistance; and the current-off segment *T3* refers to a stage from turn-off of the welding current to reconduction of the welding current.

Preferably, in step a3, the feature quantity is a first-order difference of the current signal with respect to time, and a first-order difference curve graph of the current signal with respect to time is obtained.

Preferably, in step a5, the target peak value *I_{P}* of the ramp segment is calculated according to: ${I}_{P} = \frac{{βI}_{T} - {αI}_{V}}{1 - α}$, wherein *I_{T}* is the current target value, *I_{V}* is the current value at the starting point of the ramp segment, and *α* and *β* are proportion parameters.

Preferably, the acquired current values and the feature quantities, namely first-order difference data of the current values with respect to time, are input into a calculation and analysis module, and point-by-point weighted calculation is performed by using a ramp-segment statistic calculation formula. The calculation and analysis module comprises a microprocessor, an industrial computer, a PLC, a monitoring instrument, a welding controller, a desktop computer, a notebook computer, a server or a workstation. The formula for the point-by-point weighted accumulation calculation is: ${I}_{A} = {\left({\sum }_{i = 1}^{n} {w}_{i} {I}_{i}^{m}\right)}^{- m}$, wherein *Iᵢ* is an i-th sampling value, *wᵢ* is a weight coefficient of an i-th point, *n* is a total number of sampling points, and *m* is a power weight coefficient.

Preferably, in step a7, a proportion parameter *β* of the next cycle is adjusted according to a difference between *I_{A}* and *I_{T},* namely *β* ← *β + f*(*I_{A} - I_{T}*)*,* wherein *f* is a specific adjustment method and a PID control method is adopted.

The present invention further provides a real-time welding current regulation system for an inverter resistance welding machine, wherein the system comprises the following modules:
Module m1: performing resistance spot welding, acquiring a primary-side current signal, and obtaining a curve graph of current varying with time;
Module m2: according to the curve graph of the current varying with time and based on an inverter cycle, dividing the current signal into different cycles, wherein the current signal in each cycle is divided, according to conduction and turn-off of the welding current, into a rapid rising segment *T1*, a ramp segment *T2* and a current-off segment *T3*;
Module m3: for the current signal of a current cycle, processing and calculating the rapid rising segment *T1*, performing mean filtering on primary-side current sampling values, extracting feature quantities from the current signal to obtain a feature-quantity curve graph, and determining the rapid rising segment according to the feature-quantity curve graph;
Module m4: determining a starting point of the ramp segment *T2* according to the feature-quantity curve graph, setting feature-quantity thresholds comprising a high threshold *D_{H}* and a low threshold *D_{L}*, wherein when the feature quantity is higher than the high threshold *D_{H}* for the first time and then is lower than the low threshold *D_{L}*, a time instant at which the feature quantity is lower than the low threshold is determined as the starting point of the ramp segment *T2*, and a current value corresponding to the starting point of the ramp segment *T2* is denoted as *I_{V}*;
Module m5: deriving a target peak current of the ramp segment *T2*, wherein according to a current target value *I_{T}* and the current value *I_{V}* at the starting point of the ramp segment *T2*, a target peak current *I_{P}* of the ramp segment *T2*, namely a current value at a conduction turn-off moment, is derived; when the current in the ramp segment *T2* reaches the target peak current *I_{P}*, the primary-side welding current is switched from a conducting state to an off state, thereby regulating the welding current of the current cycle in real time;
Module m6: calculating a current statistic of the current cycle, wherein point-by-point weighted accumulation is performed on current sampling values within a time range from the starting point of the ramp segment *T2* to a current turn-off moment, so as to obtain a statistic *I_{A}* of the ramp segment *T2*;
Module m7: adjusting a calculation formula of the target peak current *IP* for a next cycle according to *I_{A}* and *I_{T}*;
Module m8: repeating the above modules until the welding energization time reaches a preset value.

Preferably, in module m1, the primary-side current signal of the inverter resistance welding machine is acquired in real time, and the primary-side current signal refers to a rated current of a winding on a high-voltage side of a transformer in the inverter welding machine, namely a power input side;
in module m2, the rapid rising segment *T1* refers to a stage in which a current value increases rapidly after the welding current is conducted; the ramp segment *T2* refers to a stage in which the welding current is substantially stable but slowly increases due to a change in workpiece resistance; and the current-off segment *T3* refers to a stage from turn-off of the welding current to reconduction of the welding current;
in module m3, the feature quantity is a first-order difference of the current signal with respect to time, and a first-order difference curve graph of the current signal with respect to time is obtained.

Preferably, in module m5, the target peak value *I_{P}* of the ramp segment is calculated according to: ${I}_{P} = \frac{{βI}_{T} - {αI}_{V}}{1 - α}$, wherein *I_{T}* is the current target value, *I_{V}* is the current value at the starting point of the ramp segment, and *α* and *β* are proportion parameters;
the acquired current values and the feature quantities, namely first-order difference data of the current values with respect to time, are input into a calculation and analysis module, and point-by-point weighted calculation is performed by using a ramp-segment statistic calculation formula. The calculation and analysis module comprises a microprocessor, an industrial computer, a PLC, a monitoring instrument, a welding controller, a desktop computer, a notebook computer, a server or a workstation; the formula for the point-by-point weighted accumulation calculation is: ${I}_{A} = {\left({\sum }_{i = 1}^{n} {w}_{i} {I}_{i}^{m}\right)}^{- m}$, wherein *Iᵢ* is an i-th sampling value, *wᵢ* is a weight coefficient of an i-th point, *n* is a total number of sampling points, and *m* is a power weight coefficient;
in module m7, a proportion parameter *β* of the next cycle is adjusted according to a difference between *I_{A}* and *I_{T},* namely *β* ← *β + f*(*I_{A} - I_{T}*)*,* wherein *f* is a specific adjustment method and a PID control method is adopted.

Compared with the prior art, the present invention has the following beneficial effects:
1. According to the present invention, the primary-side current signal of the inverter welding machine is acquired in real time and is subjected to segment processing, namely processing into the rapid rising segment, the ramp segment and the current-off segment. The starting point of the ramp segment is determined by using the feature quantity, and the target peak current of the ramp segment is derived according to the current target value. When the current in the ramp segment reaches the target peak current, the welding current is turned off, thereby regulating the welding current of the current cycle in real time. The current statistic of the current cycle is calculated and compared with the current target value, and the target peak current for the next cycle is then adjusted. The above steps are repeated until the welding energization time reaches a preset value, thereby realizing fine control of the welding current;
2. By monitoring and controlling the welding current in real time, the present invention effectively reduces welding current fluctuations caused by welding expulsion, transformer magnetization, load variations and the like, improves consistency of the welding process, ensures joint strength and reliability, reduces a reject rate in the welding process, and improves production efficiency;
3. The present invention overcomes the drawback of conventional methods in which the current cycle is only measured but not adjusted, realizes real-time control of the welding current in the current cycle, and improves control timeliness. Through iterative adjustment of the target peak current for the next cycle, adaptation to different loads is realized. The invention can be widely applied to welding of plates made of different materials and having different thicknesses, thereby improving universality and adaptability of current control.

### BRIEF DESCRIPTION OF THE DRAWINGS

Other features, objectives and advantages of the present invention will become more apparent by reading the following detailed description of non-limiting embodiments with reference to the accompanying drawings:

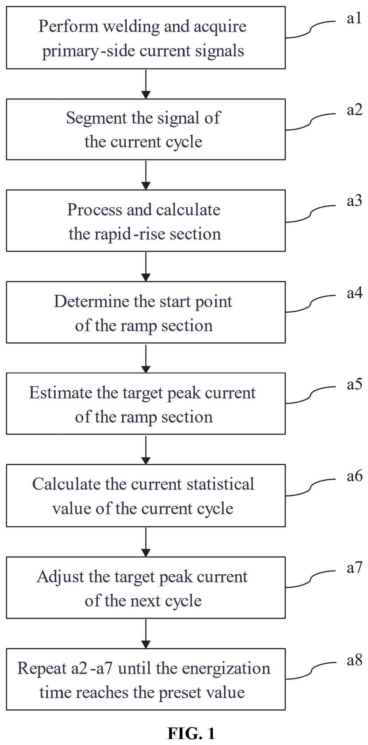

FIG. 1 is a flow chart of the present invention;
FIG. 2 is a schematic diagram of the system of the present invention;
FIG. 3 is a schematic diagram of acquisition of the primary-side current signal according to the present invention;
FIG. 4 is a schematic diagram of segment processing of the current signal of the current cycle according to the present invention;
FIG. 5 is a schematic diagram for determining the starting point of the ramp segment according to the present invention;
wherein 1 denotes an electrode cap; 2 denotes an electrode rod; 3 denotes a workpiece to be tested; 4 denotes a current sensor; 5 denotes a current signal acquisition module; 6 denotes a calculation and analysis module; and 7 denotes a current regulation module.

### DETAILED DESCRIPTION OF EMBODIMENTS

The present invention is described in detail below with reference to specific embodiments. The following embodiments are helpful for those skilled in the art to further understand the present invention, but do not limit the present invention in any form. It should be noted that several variations and improvements may be made by those of ordinary skill in the art without departing from the inventive concept of the present invention, and such variations and improvements fall within the protection scope of the present invention.

### Embodiment 1:

According to a real-time welding current regulation method for an inverter resistance welding machine provided by the present invention, the method comprises the following steps:
Step a1: performing resistance spot welding, acquiring a primary-side current signal, and obtaining a curve graph of current varying with time; acquiring the primary-side current signal of the inverter resistance welding machine in real time, wherein the primary-side current signal refers to a rated current of a winding on a high-voltage side of a transformer in the inverter welding machine, namely a power input side.
Step a2: according to the curve graph of the current varying with time and based on an inverter cycle, dividing the current signal into different cycles, wherein the current signal in each cycle is divided, according to conduction and turn-off of the welding current, into a rapid rising segment *T1*, a ramp segment *T2* and a current-off segment *T3*; the rapid rising segment *T1* refers to a stage in which a current value increases rapidly after the welding current is conducted; the ramp segment *T2* refers to a stage in which the welding current is substantially stable but slowly increases due to a change in workpiece resistance; and the current-off segment *T3* refers to a stage from turn-off of the welding current to reconduction of the welding current.
Step a3: for the current signal of a current cycle, processing and calculating the rapid rising segment *T1*, performing mean filtering on primary-side current sampling values, extracting feature quantities from the current signal to obtain a feature-quantity curve graph, and determining the rapid rising segment according to the feature-quantity curve graph; the feature quantity is a first-order difference of the current signal with respect to time, and a first-order difference curve graph of the current signal with respect to time is obtained.
Step a4: determining a starting point of the ramp segment *T2* according to the feature-quantity curve graph, setting feature-quantity thresholds comprising a high threshold *D_{H}* and a low threshold *D_{L}*, wherein when the feature quantity is higher than the high threshold *D_{H}* for the first time and then is lower than the low threshold *D_{L}*, a time instant at which the feature quantity is lower than the low threshold is determined as the starting point of the ramp segment *T2*, and a current value corresponding to the starting point of the ramp segment *T2* is denoted as *I_{V}*;
Step a5: deriving a target peak current of the ramp segment *T2*, wherein according to a current target value *I_{T}* and the current value *I_{V}* at the starting point of the ramp segment *T2*, a target peak current *I_{P}* of the ramp segment *T2*, namely a current value at a conduction turn-off moment, is derived; when the current in the ramp segment *T2* reaches the target peak current *I_{P}*, the primary-side welding current is switched from a conducting state to an off state, thereby regulating the welding current of the current cycle in real time; the target peak value *I_{P}* of the ramp segment is calculated according to: ${I}_{P} = \frac{{βI}_{T} - {αI}_{V}}{1 - α}$, wherein *I_{T}* is the current target value, *I_{V}* is the current value at the starting point of the ramp segment, and *α* and *β* are proportion parameters.
Step a6: calculating a current statistic of the current cycle, wherein point-by-point weighted accumulation is performed on current sampling values within a time range from the starting point of the ramp segment *T2* to a current turn-off moment, so as to obtain a statistic *I_{A}* of the ramp segment *T2*; inputting the acquired current values and the feature quantities, namely first-order difference data of the current values with respect to time, into a calculation and analysis module, and performing point-by-point weighted calculation by using a ramp-segment statistic calculation formula, wherein the calculation and analysis module comprises a microprocessor, an industrial computer, a PLC, a monitoring instrument, a welding controller, a desktop computer, a notebook computer, a server or a workstation; the formula for the point-by-point weighted accumulation calculation is: ${I}_{A} = {\left({\sum }_{i = 1}^{n} {w}_{i} {I}_{i}^{m}\right)}^{- m}$, wherein *Iᵢ* is an i-th sampling value, *wᵢ* is a weight coefficient of an i-th point, *n* is a total number of sampling points, and *m* is a power weight coefficient.
Step a7: adjusting a calculation formula of the target peak current *I_{P}* for a next cycle according to *I_{A}* and *I_{T}*; adjusting a proportion parameter *β* of the next cycle according to a difference between *I_{A}* and *I_{T},* namely *β* ← *β + f*(*I*_{A} *- I_{T}*)*,* wherein f is a specific adjustment method and a PID control method is adopted.
Step a8: repeating the above steps until the welding energization time reaches a preset value.

The present invention further provides a real-time welding current regulation system for an inverter resistance welding machine. The real-time welding current regulation system for an inverter resistance welding machine may be implemented by executing the process steps of the above real-time welding current regulation method for an inverter resistance welding machine, that is, those skilled in the art may understand the real-time welding current regulation method for an inverter resistance welding machine as a preferred embodiment of the real-time welding current regulation system for an inverter resistance welding machine.

### Embodiment 2:

The present invention further provides a real-time welding current regulation system for an inverter resistance welding machine, wherein the system comprises the following modules:
Module m1: performing resistance spot welding, acquiring a primary-side current signal, and obtaining a curve graph of current varying with time; acquiring the primary-side current signal of the inverter resistance welding machine in real time, wherein the primary-side current signal refers to a rated current of a winding on a high-voltage side of a transformer in the inverter welding machine, namely a power input side;
Module m2: according to the curve graph of the current varying with time and based on an inverter cycle, dividing the current signal into different cycles, wherein the current signal in each cycle is divided, according to conduction and turn-off of the welding current, into a rapid rising segment *T1*, a ramp segment *T2* and a current-off segment *T3*; the rapid rising segment *T1* refers to a stage in which a current value increases rapidly after the welding current is conducted; the ramp segment *T2* refers to a stage in which the welding current is substantially stable but slowly increases due to a change in workpiece resistance; and the current-off segment *T3* refers to a stage from turn-off of the welding current to reconduction of the welding current;
Module m3: for the current signal of a current cycle, processing and calculating the rapid rising segment *T1*, performing mean filtering on primary-side current sampling values, extracting feature quantities from the current signal to obtain a feature-quantity curve graph, and determining the rapid rising segment according to the feature-quantity curve graph; the feature quantity is a first-order difference of the current signal with respect to time, and a first-order difference curve graph of the current signal with respect to time is obtained.
Module m4: determining a starting point of the ramp segment *T2* according to the feature-quantity curve graph, setting feature-quantity thresholds comprising a high threshold *D_{H}* and a low threshold *D_{L}*, wherein when the feature quantity is higher than the high threshold *D_{H}* for the first time and then is lower than the low threshold *D_{L}*, a time instant at which the feature quantity is lower than the low threshold is determined as the starting point of the ramp segment *T2*, and a current value corresponding to the starting point of the ramp segment *T2* is denoted as *I_{V}*;
Module m5: deriving a target peak current of the ramp segment *T2*, wherein according to a current target value *I_{T}* and the current value *I_{V}* at the starting point of the ramp segment *T2*, a target peak current *I_{P}* of the ramp segment *T2*, namely a current value at a conduction turn-off moment, is derived; when the current in the ramp segment *T2* reaches the target peak current *I_{P}*, the primary-side welding current is switched from a conducting state to an off state, thereby regulating the welding current of the current cycle in real time; the target peak value *I_{P}* of the ramp segment is calculated according to: ${I}_{P} = \frac{{βI}_{T} - {αI}_{V}}{1 - α}$, wherein *IT* is the current target value, *I_{V}* is the current value at the starting point of the ramp segment, and *α* and *β* are proportion parameters;
Module m6: calculating a current statistic of the current cycle, wherein point-by-point weighted accumulation is performed on current sampling values within a time range from the starting point of the ramp segment *T2* to a current turn-off moment, so as to obtain a statistic *IA* of the ramp segment *T2*; inputting the acquired current values and the feature quantities, namely first-order difference data of the current values with respect to time, into a calculation and analysis module, and performing point-by-point weighted calculation by using a ramp-segment statistic calculation formula, wherein the calculation and analysis module comprises a microprocessor, an industrial computer, a PLC, a monitoring instrument, a welding controller, a desktop computer, a notebook computer, a server or a workstation; the formula for the point-by-point weighted accumulation calculation is: IA = (Σi=1..n wi Ii^m)^(1/m), wherein *Iᵢ* is an i-th sampling value, *wᵢ* is a weight coefficient of an i-th point, *n* is a total number of sampling points, and *m* is a power weight coefficient;
Module m7: adjusting a calculation formula of the target peak current *I_{P}* for a next cycle according to *I_{A}* and *I_{T}*; adjusting a proportion parameter *β* of the next cycle according to a difference between *I_{A}* and *I_{T},* namely *β* ← *β + f*(*I*_{A} *- I_{T}*)*,* wherein *f* is a specific adjustment method and a PID control method is adopted.
Module m8: repeating the above modules until the welding energization time reaches a preset value.

### Embodiment 3:

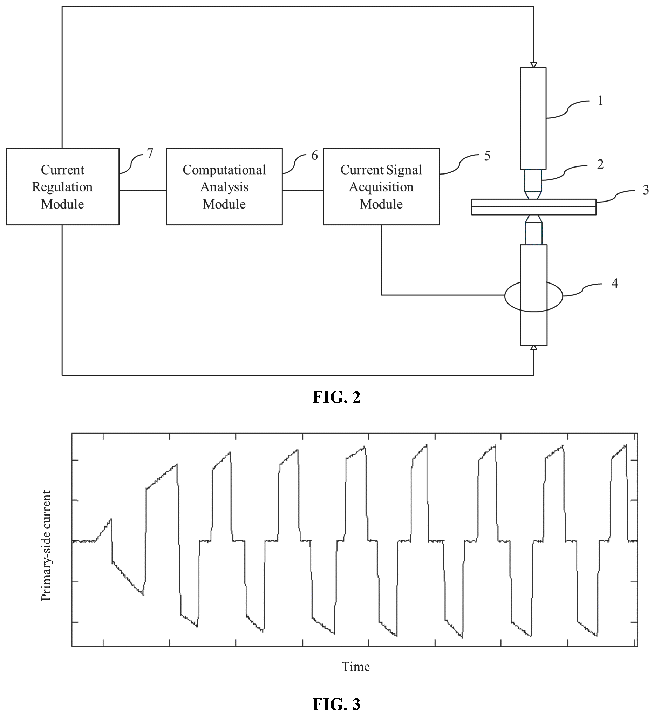

As shown in FIG. 2, the workpieces to be welded used in the present embodiment are divided into three load conditions, namely no load, a light load of 0.8 mm steel plate + 0.8 mm steel plate, and a heavy load of 1.6 mm steel plate + 1.6 mm steel plate. The inverter frequency is 1 kHz, the transformer transformation ratio is 40:1, and the set current is 4-12 kA. Real-time regulation of the welding current of the inverter resistance welding machine is performed by the following steps.

Step S1: taking the light load as an example, resistance spot welding is performed, the welding current is selected as 8 kA, and therefore the target current *I_{T}* is 200 A. A current signal in the resistance spot welding process is acquired and recorded in real time to obtain a curve graph of current varying with time, as shown in FIG. 3.

Step S2: according to the curve graph of current varying with time and based on an inverter cycle, the current signal is divided into different cycles, and the current signal in each cycle is divided, according to conduction and turn-off of the welding current, into a rapid rising segment *T1,* a ramp segment *T2* and a current-off segment *T3*.

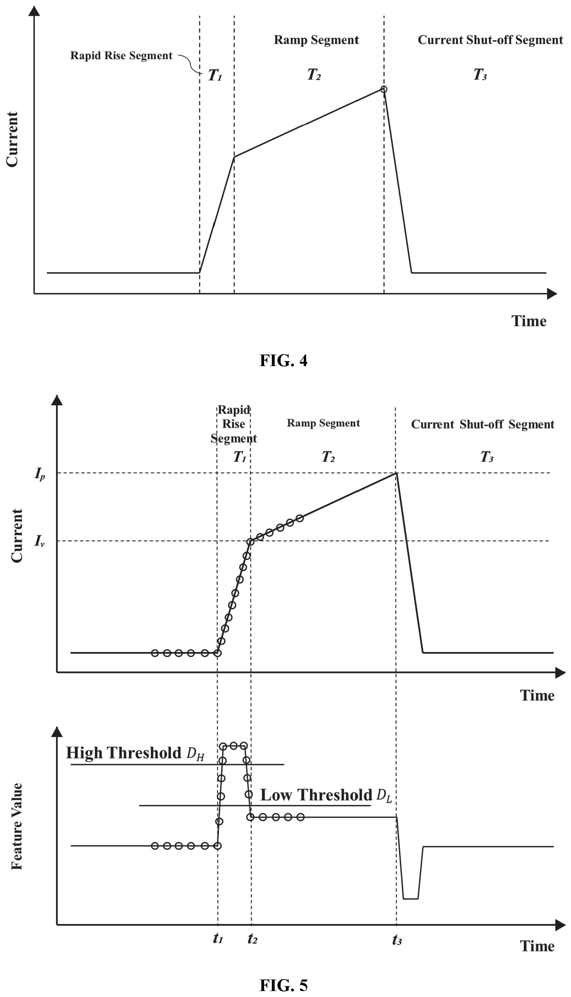

Step S3: for the current signal of the current cycle, the rapid rising segment is processed and calculated. Mean filtering is performed on primary-side current sampling values, and feature quantities are extracted from the current signal in the resistance spot welding process to obtain a feature-quantity curve graph, as shown in FIG. 5. The rapid rising segment is determined according to the feature-quantity schematic diagram. At time *t₁* = 0.65 ms, the feature quantity changes from zero to greater than zero; therefore, the time *t₁* is the starting point of the rapid rising segment. In the present example, the rising segment time is 16.12 µs.

Step S4: the starting point of the ramp segment is determined according to the feature-quantity schematic diagram, as shown in FIG. 5. Feature-quantity thresholds are set according to Table 1, wherein the high threshold *D_{H}* is 2 × 10⁵ A·s⁻¹ and the low threshold *D_{L}* is 10⁵ A·s⁻¹. At time *t₂ =* 0.66 ms, the feature quantity is higher than the high threshold *D_{H}* for the first time and then is lower than the low threshold *D_{L}.* The time *t₂* is the starting point of the ramp segment, and the current value corresponding to the time *t₂* in FIG. 3 is found to be *I_{V} =* 125 A.

**Table 1 Recommended Selection Table for High and Low Thresholds**

| I_{T} / A | D_{H} / A·s⁻¹ | D_{L} / A·s⁻¹ |
|---|---|---|
| 0-75 | 3×10⁴ | 1×10⁴ |
| 75-150 | 5×10⁴ | 2×10⁴ |
| 150-300 | 1×10⁵ | 5×10⁴ |
| 300-600 | 2×10⁵ | 1×10⁵ |
| 600-1200 | 3×10⁵ | 2×10⁵ |
| 1200-2400 | 3×10⁵ | 4×10⁵ |

Step S5: according to the current target value *I_{T}* and the current value *I_{V}* at the starting point of the ramp segment, the target peak current *I_{P}* is derived. The target peak current *I_{P}* is calculated according to: ${I}_{P} = \frac{{βI}_{T} - {αI}_{V}}{1 - α}$, wherein *I_{T}* is the current target value, *I_{V}* is a valley value of the ramp segment, namely the current value at the starting point of the ramp segment, and *α* and *β* are proportion parameters. In the present example, *α =* 0.5 and an initial value of *β* is 1, namely *I_{P} =* 2*I_{T} - I_{V}.* When the current target value *I_{T} =* 200 A, the corresponding target peak current *I_{P}* = 275 A is obtained according to the formula, and the corresponding time *t3 =* 0.84 ms is the current turn-off moment. The welding current is turned off, thereby realizing real-time regulation of the welding current.

Step S6: from the starting point of the ramp segment *T2* to the current turn-off moment, point-by-point weighted accumulation is performed on current sampling values within this time range to obtain a statistic *I_{A}* of the ramp segment *T2.* The statistic *I_{A}* of the ramp segment is calculated according to: ${I}_{A} = {\sum }_{i = 1}^{n} {w}_{i} {I}_{i}$, wherein *wᵢ* is a weight coefficient of an i-th point, ${w}_{i} = \frac{1}{n}$ in the present example, *Iᵢ* is an i-th sampling value, and *n* is the total number of sampling points. In the present embodiment, *n =* 180, and the calculated statistic *I_{A}* of the ramp segment is 195 A.

Step S7: the proportion parameter *β* of the next cycle is adjusted according to *I_{A}* and *I_{T}.* In the present example, proportional control is adopted, and the proportional coefficient is 0.01, namely *β* ← *β+*0.01(*I*_{A} *- I_{T}*)*,* After 5 cycles, the statistic *I_{A}* of the ramp segment is 198 A, and the error rate is 1.0%, thereby realizing fine control of the welding current.

It can be seen from Table 2 that when the set current is 4-12 kA, the measured current changes as the load changes. Compared with the conventional method, the new method has smaller fluctuations under different loads, thereby verifying the effectiveness of the present invention.

**Table 2 Error Comparison Between Actual Current Under Different Loads and Set Current**

| **Method** | **Set current / kA** | **Measured current / kA** | | | **Fluctuation / kA** |
|---|---|---|---|---|---|
| | | **No-load** | **Light-load** | **Heavy-load** | |
| Conventional method | 4 | 3.96 | 3.8 | 3.88 | 0.16 |
| Conventional method | 6 | 5.76 | 5.96 | 5.68 | 0.28 |
| Conventional method | 8 | 7.54 | 7.70 | 7.89 | 0.35 |
| Conventional method | 10 | 9.48 | 9.86 | 9.94 | 0.48 |
| Conventional method | 12 | 11.32 | 11.62 | 11.87 | 0.55 |
| New method | 4 | 3.97 | 3.95 | 3.92 | 0.05 |
| New method | 6 | 5.96 | 5.94 | 5.92 | 0.04 |
| New method | 8 | 7.95 | 7.92 | 7.90 | 0.05 |
| New method | 10 | 9.93 | 9.90 | 9.89 | 0.04 |
| New method | 12 | 11.9 | 11.88 | 11.86 | 0.04 |

### Embodiment 4

Compared with Embodiment 3, the workpieces to be welded in the present embodiment are 2 mm aluminum plate + 2 mm aluminum plate, the welding current is 30 kA, the inverter frequency is 2 kHz, and the transformer transformation ratio is 30:1. Therefore, the target current *I_{T}* is 1000 A. Real-time regulation of the welding current of the inverter resistance welding machine is performed according to the same steps.

In the present embodiment, the feature-quantity thresholds are selected such that the high threshold *D_{H}* is 3 × 10⁵ A·s⁻¹ and the low threshold *D_{L}* is 2 × 10⁵ A·s⁻¹.

In the present embodiment, the starting time of the rapid rising segment is *t₁ =* 0.56 ms, and the rising segment time is 60.36 µs. According to the high threshold and the low threshold, the starting time of the ramp segment is determined to be *t₂* = 0.62 ms, and the current value corresponding to the starting time of the ramp segment is *I_{V} =* 923 A.

In the present embodiment, the target peak current *I_{P}* is calculated by using the current target value *I_{T}* and the current value *I_{V}* corresponding to the starting time of the ramp segment. In the present example, *α* = 0.5 and an initial value of *β* is 1. The calculation formula is *I_{P} = 2I_{T} - I_{V} ,* where *I_{T}* is the current target value and is equal to 1000 A in the present example. The target peak current *I_{P}* is calculated to be 1079 A, and the welding current is turned off at a corresponding time *t₃* = 0.88 ms.

In the present embodiment, the statistic *I_{A}* of the ramp segment is calculated according to: ${I}_{A} = \sqrt{{\sum }_{i = 1}^{n} {w}_{i} {I}_{i}^{2}}$, wherein ${w}_{i} = \frac{1}{n}$, *Iᵢ* is an i-th sampling value, and the total number n of sampling points is 260. The calculated statistic *I_{A}* of the ramp segment is 988.6 A. The proportion coefficient *β* of the next cycle is adjusted according to *I_{A}* and *I_{T}*. In the present example, proportional-integral control is adopted, the proportional coefficient is 0.01, and the integration time constant is 0.002. After 6 cycles, the current ramp-segment statistic *I_{A}* is 998.3 A and the error rate is 0.17%, thereby realizing fine control of the welding current.

Those skilled in the art are aware that, in addition to implementing the system and the respective apparatuses, modules and units provided by the present invention purely by computer-readable program code, the same functions can be realized by logically programming the method steps so that the system and the respective apparatuses, modules and units provided by the present invention are implemented in the form of logic gates, switches, application-specific integrated circuits, programmable logic controllers, embedded microcontrollers and the like. Therefore, the system and the respective apparatuses, modules and units provided by the present invention may be considered hardware components, and the apparatuses, modules and units included therein for implementing various functions may also be regarded as structures within the hardware components. The apparatuses, modules and units for implementing various functions may also be regarded either as software modules for implementing the method or as structures within hardware components.

The specific embodiments of the present invention have been described above. It should be understood that the present invention is not limited to the above specific embodiments, and those skilled in the art may make various variations or modifications within the scope of the claims without affecting the substance of the present invention. The embodiments of the present application and features in the embodiments may be combined with each other in any manner as long as no conflict occurs.

## Claims

1. A real-time welding current regulation method for an inverter resistance welding machine, **characterized in that** the method comprises the following steps:
Step a1: performing resistance spot welding, acquiring a primary-side current signal, and obtaining a curve graph of current varying with time;
Step a2: according to the curve graph of the current varying with time and based on an inverter cycle, dividing the current signal into different cycles, wherein the current signal in each cycle is divided, according to conduction and turn-off of the welding current, into a rapid rising segment *T1*, a ramp segment *T2* and a current-off segment *T3*;
Step a3: for the current signal of a current cycle, processing and calculating the rapid rising segment *T1*, performing mean filtering on primary-side current sampling values, extracting feature quantities from the current signal to obtain a feature-quantity curve graph, and determining the rapid rising segment according to the feature-quantity curve graph;
Step a4: determining a starting point of the ramp segment *T2* according to the feature-quantity curve graph, setting feature-quantity thresholds comprising a high threshold *D_{H}* and a low threshold *D_{L}*, wherein when the feature quantity is higher than the high threshold *D_{H}* for the first time and then is lower than the low threshold *D_{L}*, a time instant at which the feature quantity is lower than the low threshold is determined as the starting point of the ramp segment *T2*, and a current value corresponding to the starting point of the ramp segment *T2* is denoted as *I_{V}*;
Step a5: deriving a target peak current of the ramp segment *T2*, wherein according to a current target value *I_{T}* and the current value *I_{V}* at the starting point of the ramp segment *T2*, a target peak current *I_{P}* of the ramp segment *T2*, namely a current value at a conduction turn-off moment, is derived; when the current in the ramp segment *T2* reaches the target peak current *I_{P}*, the primary-side welding current is switched from a conducting state to an off state, thereby regulating the welding current of the current cycle in real time;
Step a6: calculating a current statistic of the current cycle, wherein point-by-point weighted accumulation is performed on current sampling values within a time range from the starting point of the ramp segment *T2* to a current turn-off moment, so as to obtain a statistic *I_{A}* of the ramp segment *T2*;
Step a7: adjusting a calculation formula of the target peak current *I_{P}* for a next cycle according to *I_{A}* and *I_{T}*;
Step a8: repeating the above steps until the welding energization time reaches a preset value.

2. The real-time welding current regulation method for an inverter resistance welding machine according to claim 1, **characterized in that**, in step a1, the primary-side current signal of the inverter resistance welding machine is acquired in real time, and the primary-side current signal refers to a rated current of a winding on a high-voltage side of a transformer in the inverter welding machine, namely a power input side.

3. The real-time welding current regulation method for an inverter resistance welding machine according to claim 1, **characterized in that**, in step a2, the rapid rising segment *T1* refers to a stage in which a current value increases rapidly after the welding current is conducted; the ramp segment *T2* refers to a stage in which the welding current is substantially stable but slowly increases due to a change in workpiece resistance; and the current-off segment *T3* refers to a stage from turn-off of the welding current to reconduction of the welding current.

4. The real-time welding current regulation method for an inverter resistance welding machine according to claim 1, **characterized in that**, in step a3, the feature quantity is a first-order difference of the current signal with respect to time, and a first-order difference curve graph of the current signal with respect to time is obtained.

5. The real-time welding current regulation method for an inverter resistance welding machine according to claim 1, **characterized in that**, in step a5, the target peak value *I_{P}* of the ramp segment is calculated according to: ${I}_{P} = \frac{{βI}_{T} - {αI}_{V}}{1 - α}$, wherein *I_{T}* is the current target value, *I_{V}* is the current value at the starting point of the ramp segment, and *α* and *β* are proportion parameters.

6. The real-time welding current regulation method for an inverter resistance welding machine according to claim 1, **characterized in that** the acquired current values and the feature quantities, namely first-order difference data of the current values with respect to time, are input into a calculation and analysis module, and point-by-point weighted calculation is performed by using a ramp-segment statistic calculation formula. The calculation and analysis module comprises a microprocessor, an industrial computer, a PLC, a monitoring instrument, a welding controller, a desktop computer, a notebook computer, a server or a workstation. The formula for the point-by-point weighted accumulation calculation is: ${I}_{A} = {\left({\sum }_{i = 1}^{n} {w}_{i} {I}_{i}^{m}\right)}^{- m}$, wherein *Iᵢ* is an i-th sampling value, *wᵢ* is a weight coefficient of an i-th point, *n* is a total number of sampling points, and *m* is a power weight coefficient.

7. The real-time welding current regulation method for an inverter resistance welding machine according to claim 1, **characterized in that**, in step a7, a proportion parameter *β* of the next cycle is adjusted according to a difference between *I_{A}* and *I_{T},* namely *β* ← *β + f*(*I_{A} - I_{T}*)*,* wherein *f* is a specific adjustment method and a PID control method is adopted.

8. A real-time welding current regulation system for an inverter resistance welding machine, **characterized in that** the system comprises the following modules:
Module m1: performing resistance spot welding, acquiring a primary-side current signal, and obtaining a curve graph of current varying with time;
Module m2: according to the curve graph of the current varying with time and based on an inverter cycle, dividing the current signal into different cycles, wherein the current signal in each cycle is divided, according to conduction and turn-off of the welding current, into a rapid rising segment *T1,* a ramp segment *T2* and a current-off segment *T3*;
Module m3: for the current signal of a current cycle, processing and calculating the rapid rising segment *T1,* performing mean filtering on primary-side current sampling values, extracting feature quantities from the current signal to obtain a feature-quantity curve graph, and determining the rapid rising segment according to the feature-quantity curve graph;
Module m4: determining a starting point of the ramp segment *T2* according to the feature-quantity curve graph, setting feature-quantity thresholds comprising a high threshold *D_{H}* and a low threshold *D_{L},* wherein when the feature quantity is higher than the high threshold *D_{H}* for the first time and then is lower than the low threshold *D_{L},* a time instant at which the feature quantity is lower than the low threshold is determined as the starting point of the ramp segment *T2,* and a current value corresponding to the starting point of the ramp segment *T2* is denoted as *I_{V};*
Module m5: deriving a target peak current of the ramp segment *T2*, wherein according to a current target value *I_{T}* and the current value *I_{V}* at the starting point of the ramp segment *T2*, a target peak current *I_{P}* of the ramp segment *T2,* namely a current value at a conduction turn-off moment, is derived; when the current in the ramp segment *T2* reaches the target peak current *I_{P},* the primary-side welding current is switched from a conducting state to an off state, thereby regulating the welding current of the current cycle in real time;
Module m6: calculating a current statistic of the current cycle, wherein point-by-point weighted accumulation is performed on current sampling values within a time range from the starting point of the ramp segment *T2* to a current turn-off moment, so as to obtain a statistic *I_{A}* of the ramp segment *T2*;
Module m7: adjusting a calculation formula of the target peak current *I_{P}* for a next cycle according to *I_{A}* and *I_{T}*;
Module m8: repeating the above modules until the welding energization time reaches a preset value.

9. The real-time welding current regulation system for an inverter resistance welding machine according to claim 8, **characterized in that**, in module m1, the primary-side current signal of the inverter resistance welding machine is acquired in real time, and the primary-side current signal refers to a rated current of a winding on a high-voltage side of a transformer in the inverter welding machine, namely a power input side;
in module m2, the rapid rising segment *T1* refers to a stage in which a current value increases rapidly after the welding current is conducted; the ramp segment *T2* refers to a stage in which the welding current is substantially stable but slowly increases due to a change in workpiece resistance; and the current-off segment *T3* refers to a stage from turn-off of the welding current to reconduction of the welding current;
in module m3, the feature quantity is a first-order difference of the current signal with respect to time, and a first-order difference curve graph of the current signal with respect to time is obtained.

10. The real-time welding current regulation system for an inverter resistance welding machine according to claim 8, **characterized in that**, in module m5, the target peak value *I_{P}* of the ramp segment is calculated according to: ${I}_{P} \frac{{βI}_{T} - {αI}_{V}}{1 - α}$, wherein *I_{T}* is the current target value, *I_{V}* is the current value at the starting point of the ramp segment, and *α* and *β* are proportion parameters;
the acquired current values and the feature quantities, namely first-order difference data of the current values with respect to time, are input into a calculation and analysis module, and point-by-point weighted calculation is performed by using a ramp-segment statistic calculation formula. The calculation and analysis module comprises a microprocessor, an industrial computer, a PLC, a monitoring instrument, a welding controller, a desktop computer, a notebook computer, a server or a workstation; the formula for the point-by-point weighted accumulation calculation is: ${I}_{A} = {\left({\sum }_{i = 1}^{n} {w}_{i} {I}_{i}^{m}\right)}^{- m}$, wherein *Iᵢ* is an i-th sampling value, *wᵢ* is a weight coefficient of an i-th point, *n* is a total number of sampling points, and *m* is a power weight coefficient;
in module m7, a proportion parameter *β* of the next cycle is adjusted according to a difference between *I_{A}* and *I_{T},* namely *β* ← *β + f*(*I*_{A} *- I_{T}*)*,* wherein *f* is a specific adjustment method and a PID control method is adopted.
